# EUROPÄISCHE PATENTANMELDUNG

(11) **EP 0 897 944 A2**
(43) Veröffentlichungstag der Anmeldung: **24.02.1999**
(21) Anmeldenummer: 98112352.4
(22) Anmeldetag: 02.07.1998
(51) Int. Cl.: C08J 5/04, C08J 3/09

(54) **Verfahren zum Imprägnieren von endlosen Fasern mit einem Thermoplasten sowie nach diesem Verfahren hergestellte Faser-Matrix-Verbunde**

(30) Priorität: 22.08.1997 DE 19736573
(71) Anmelder: HÜLS AKTIENGESELLSCHAFT, 45764 Marl (DE)
(72) Erfinder: Göring, Rainer, 46325 Borken (DE); Schmitz, Guido, Dr., 48249 Dülmen (DE)

(57) **Zusammenfassung**

Faser-Matrix-Verbunde mit hoher interlaminarer Scherfestigkeit werden durch ein Verfahren hergestellt, bei dem ein endloser Faserstrang oder ein textiles Flächengebilde mit der Lösung eines Polyamids in einem Alkohol mit einem Siedepunkt von 160 °C oder weniger getränkt wird, wonach das Lösemittel wieder aus der Matrix ausgetrieben wird.

Die erhaltenen Verbunde eignen sich beispielsweise für das Bewickeln von Hohlkörpern.

## Beschreibung

Gegenstand der Erfindung ist die Imprägnierung von Endlosfasern mit einem thermoplastischen Kunststoff über eine Lösung in einem flüchtigen Lösemittel. Gegenstand der Erfindung sind weiterhin die nach diesem Verfahren hergestellten Faser-Matrix-Verbunde.

Faser-Matrix-Verbunde sind Composites, bei denen die mechanischen Eigenschaften der Faser, wie insbesondere der hohe E-Modul sowie die hohe Zugfestigkeit, voll ausgenutzt werden sollen. Dazu müssen eingeleitete Kräfte zwischen den einzelnen Fasern übertragen werden können. Dies gelingt nur dann ausreichend, wenn die Fasern vollständig von der Matrix umschlossen werden und eine gute Haftung zwischen Matrix und Faser vorliegt. Ein Maß für die Güte der Tränkung und die Anbindung der Matrix an die Faser ist u. a. die interlaminare Scherfestigkeit, die man z. B. nach DIN EN 2377 an Composite-Proben ermitteln kann.

Zu Faser-Matrix-Verbunden mit thermoplastischer Matrix sind in der Vergangenheit zahlreiche Entwicklungen durchgeführt worden. Insbesondere sucht man durch geeignete Maschinentechnik zu erreichen, daß die zähviskose Schmelze der Matrix zwischen die einzelnen Filamente eindringt. Aus der EP-A-0 415 517 ist z. B. eine Technik bekannt, bei der ein erhöhter Systemdruck des Matrixwerkstoffes quer zur Faserrichtung abgebaut wird. Das Faserbundel wird dabei über einen Düsenkopf gezogen und der Matrixwerkstoff quer zur Bewegungsrichtung des Bündels durchgedrückt. Bei einer anderen technischen Lösung (EP-A-0 364 828) versucht man, die Durchtränkung durch ein häufiges Umlenken des Faserstranges bzw. durch ein Aufspreizen der Faserbündel vor der Durchtränkung zu verbessern. Bei den bisher bekannten Verfahren ist aber problematisch, daß aufgrund der hohen Schmelzviskositäten der Formmassen eine ausreichende Tränkung der Fasern bei gleichzeitiger Erzielung eines hohen Faservolumengehaltes nur schwer realisierbar ist, ohne die Anfangsfestigkeiten der Fasern erheblich zu beeinträchtigen.

Der Faservolumengehalt ist dabei definiert als das Verhältnis zwischen Faservolumen und Gesamtvolumen des Faser-Matrix-Verbundes. Je höher der Faservolumengehalt ist, desto mehr werden die Eigenschaften des Verbundes durch das Fasermaterial mit seinem hohen E-Modul und seiner hohen Zugfestigkeit bestimmt.

Weiterhin sind aus der EP-A-0 422 358 verschiedene Verfahren zur Herstellung von endlosfaserverstärkten Polyamiden bekannt, nämlich
1. Tränkung von Garnen, Rovings, Gewebe, UD-Tapes usw. mit der Lösung von Polyamid in m-Kresol, wonach das Lösemittel entfernt wird.
2. Alternierendes Aufeinanderlegen von z. B. Geweben oder UD-Tapes und dünnen Polyamidfolien und anschließende Formung unter Druck und Temperatur in einer Presse oder einem Autoklaven.
3. Aufbringen eines Polyamidpulvers mittels Streubeschichtung mit nachfolgendem Aufheizen.

Während das erste Verfahren wegen der Verwendung des hochsiedenden Gefahrstoffs m-Kresol (Siedepunkt 203 °C) sehr aufwendig und problematisch ist, erfordern die beiden letzteren wegen der Verwendung von Folien oder Pulver zusätzliche Verfahrensschritte und führen zudem nur zu Verbunden mit einem niedrigen Faservolumengehalt (maximal ca. 50 %) und einer für manche Anwendungszwecke nicht ausreichenden interlaminaren Scherfestigkeit.

Stand der Technik ist weiterhin die Naßwicklung von Endlosfasern. Hierbei besteht die Matrix aus einem duromeren Harzsystem, das bei der Tränkung dünnfiüssig ist. Nach dem Aushärten des Harzes erhält man einen faserverstärkten duromeren Kunststoff. Bei diesem Verfahren erhält man zwar eine gute Durchtränkung der Fasern, jedoch ist die ausgehärtete Matrix sehr spröde, so daß die Vorteile thermoplastischer Matrixsysteme nicht zum Tragen kommen.

Es bestand daher die Aufgabe, Faser-Matrix-Verbunde herzustellen, bei denen die Fasern vollständig von der Matrix umschlossen sind und bei denen gleichzeitig ein hoher Faservolumengehalt erreichbar ist. Gleichzeitig sollte eine hohe interlaminare Scherfestigkeit erzielt werden. Weiterhin sollten die Ausgangseigenschaften der Fasern, insbesondere die Festigkeit, möglichst wenig beeinträchtigt werden. Ferner sollte das Verfahren einfach durchführbar sein und zu Verbunden mit hoher Steifigkeit und Zugfestigkeit führen. Auch die Verwendung von Hilfsstoffen mit hohem Gefährdungspotential sollte vermieden werden.

Diese Aufgaben wurden durch ein Verfahren zur Herstellung von Faserverbundwerkstoffen gelöst, bei dem ein endloser Faserstrang oder ein textiles Flächengebilde mit der Lösung eines Polyamids in einem Alkohol mit einem Siedepunkt von 160 °C oder weniger getränkt wird, wonach das Lösemittel wieder aus der Matrix ausgetrieben wird.

Ein erfindungsgemäß verwendeter endloser Faserstrang kann ein Garn oder ein Roving sein, wobei sowohl ungedrehte Rovings als auch gedrehte oder gefachte Rovings verwendet werden können. Unter textilem Flächengebilde sollen im Rahmen der Erfindung Gelege, Gewebe oder Geflechte verstanden werden. In der einfachsten Ausführungsform (als UD-Tapes) bestehen Gelege aus parallel zueinander ausgerichteten Garnen oder Rovings, welche im allgemeinen durch dünne Hilfsfäden zusammengehalten werden. Ihre Breite richtet sich nach dem späteren Gebrauch; zum Beispiel kann sie für das Armieren von Behältern 30 mm betragen.

Wenn in einem Bauteil mehrere Verstärkungsrichtungen benötigt werden, kann man mehrere Gelege zu sogenannten Multiaxialgelegen kombinieren. Diese können bis zu 4 Verstärkungslagen mit unterschiedlichen Faserarten und unterschiedlicher Faserorientierung enthalten. Die Herstellung von komplex belasteten Bauteilen kann durch den Einsatz dieser multiaxialen Gelege vereinfacht werden, wenn die Faserorientierungen der Gelege bereits während der Herstellung auf die Bauteilbelastungen abgestimmt werden.

Gewebe werden webtechnisch aus Garnen oder Rovings hergestellt. Die Verstärkungsfasern liegen hierbei in einer 0/90°-Anordnung vor, wobei sie sich gegenseitig über- oder unterschneiden. Die Webart (Leinen, Köper, Atlas usw.) kann ebenso variiert werden wie die Faserarten oder -dicken in 0°- und in 90°-Richtung. So läßt sich beispielsweise das Verstärkungsverhältnis variieren.

Bei Geflechten kann im Gegensatz dazu der Winkel zwischen den beiden Verstärkungsrichtungen in weiten Grenzen eingestellt werden. Geflechte können als Band (Litze, Tresse) oder als Schlauch hergestellt werden. Geflechtschläuche eignen sich hervorragend zur Herstellung von Bauteilen mit einer geschlossenen Oberfläche.

Beim erfindungsgemäßen Verfahren wird ein alkohollösliches Polyamid verwendet. Hierbei kann grundsätzlich jedes bekannte alkohollösliche Polyamid eingesetzt werden. Bevorzugt werden solche Polyamide bzw. Copolyamide eingesetzt, die aus folgenden Komponenten hergestellt sind:
a) 20 bis 100 Mol-% einer Kombination aus äquivalenten Mengen von Diamin und Dicarbonsäure, wobei 30 bis 100 Mol-% des Diamins ein cycloaliphatisches oder verzweigtes Diamin mit mindestens 6 Kohlenstoffatomen ist, und
b) 0 bis 80 Mol-% polyamidbildender Monomerer aus der Klasse der Lactame oder Aminocarbonsäuren mit mindestens 6 Kohlenstoffatomen und besonders bevorzugt mindestens 11 Kohlenstoffatomen.

In der Komponente a) kann als Dicarbonsäure jede aliphatische, cycloaliphatische oder aromatische Dicarbonsäure mit mindestens 6 Kohlenstoffatomen Verwendung finden, beispielsweise Adipinsäure, Suberinsäure, Azelainsäure, Sebacinsäure, Undecandisäure, Dodecandisäure, Trimethyladipinsäure, Cyclohexan-1.3-dicarbonsäure, Cycohexan-1.4-dicarbonsäure, Isophthalsäure, Terephthalsäure, Naphthalindicarbonsäure (alle Isomeren), Diphenylether-4,4'-dicarbonsäure und/oder Dimerfettsäure.

Als Diamin kann gleichermaßen jedes aliphatische, verzweigte oder unverzweigte Diamin mit mindestens 4 Kohlenstoffatomen wie beispielsweise Tetramethylendiamin, Hexamethylendiamin, 2-Methylpentamethylendiamin, Octamethylendiamin, Decamethylendiamin, Dodecanlethylendiamin, m-Xylylendiamin und/oder p-Xylylendiamin Verwendung finden sowie jedes cycloaliphatische oder verzweigte Diamin mit mehr als 8 Kohlenstoffatomen wie beispielsweise 2,2,4- oder 2,4,4-Trimethylhexamethylendiamin, 5-Methyl-nonamethylendiamin, 2,4-Dimethylhexamethylendiamin, Isophorondiamin, 4,4'-Diaminodiyclohexylmethan (alle Isomere), 3,3'-Dimethyl-4,4'-diaminodicyclohexylmethan (alle Isomere), 3,5,3',5'-Tetramethyl-4,4'-diaminodicyclohexylmethan (alle Isomere) und/oder 1,4-Bisaminomethylcyclohexan (alle Isomere).

Als Lactam der Komponente b) eignen sich beispielsweise Caprolactam und/oder Laurinlactam, während als Aminocarbonsäure die von diesen Lactamen abgeleiteten Verbindungen eingesetzt werden können oder auch Aminocarbonsäuren, die synthetisch direkt zugänglich sind wie z. B. ω-Aminoundecansäure.

Besonders geeignete Alkohole besitzen 1 bis 4 Kohlenstoffatome wie z. B. Methanol, Ethanol, n-Propanol, i-Propanol, n-Butanol, 2-Methyl-1-propanol oder 2-Butanol. Der Alkohol soll in der Lage sein, das verwendete Polyamid bei der Verfahrenstemperatur (bevorzugt von Raumtemperatur bis zum Siedepunkt des Alkohols) zu mindestens 5 Gew.-% zu lösen.

Die in diesem Verfahren verwendeten Fasern sind vorzugsweise Aramid-, Kohlenstoff-, Glas- oder Polyethylenfasern oder auch Polyesterfasern, insbesondere aus einem flüssigkristallinen Polyester bzw. Copolyester. Es können auch Gemische verschiedener Fasern bzw. Mischgewebe verwendet werden.

Beim erfindungsgemäßen Verfahren werden besonders gute Ergebnisse erhalten, wenn das Polyamid ein Copolyamid aus Laurinlactam oder ω-Aminoundecansäure mit verzweigten oder cycloaliphatischen Diaminen mit mindestens 6 C-Atomen, bevorzugt mit mindestens 8 C-Atomen, besonders bevorzugt mit mindestens 9 C-Atomen, und mit linearen oder verzweigten Dicarbonsäuren mit 9 bis 13 C-Atomen ist. In diesem Fall besitzt die Matrix, verglichen mit anderen Polyamiden, wegen der niedrigen Carbonamidgruppenkonzentration nur eine geringe Wasseraufnahmefähigkeit bei Bewitterung. Sie behält damit auch im Kontakt mit Feuchtigkeit ihre hohe Steifigkeit und geringe Kriechneigung. Die Matrix kann daher bei Belastung des Verbundes nicht in dem Ausmaß wie bei anderen Polyamiden von den Fasern weg und damit aus dem Verbund herauskriechen.

Generell wird bevorzugt, ein Polyamid einzusetzen, das vom Molekulargewicht her weniger ein Schmelzkleber, sondern eher ein Thermoplast ist. Dennoch besteht die Möglichkeit, in den Fällen, in denen man etwa aus Löslichkeitsgründen ein niedermolekulares Polyamid einsetzt, nach oder bei Herstellung des Verbundes, etwa durch Erhitzen, das Molekulargewicht durch Nachkondensieren zu erhöhen. Dies ist bei Polyamiden Stand der Technik.

Aus Gründen der Gebrauchstüchtigkeit auch bei höheren Temperaturen, etwa bei Sonneneinstrahlung, ist weiterhin bevorzugt, daß das als Matrix verwendete Polyamid eine Wärmeformbeständigkeit, gemessen als Vicat A-Wert gemäß DIN 53460, von mindestens 80 °C, besonders bevorzugt von mindestens 100 °C und ganz besonders bevorzugt von mindestens 115 °C besitzt.

Im erfindungsgemäßen Verfahren besitzt die Lösung bei der erforderlichen Polyamidkonzentration eine so geringe Viskosität, daß man eine optimale Durchtränkung der Fasern erzielt. Die Viskosität liegt hierbei in der Regel in einem Bereich zwischen 10⁻¹ und 10² Pa s. Überraschenderweise wurde gefunden, daß in den Fällen, in denen ein cycloaliphatisches Diamin als Comonomer enthalten ist, bei gleicher Konzentration die Lösungsviskosität besonders gering ist, verglichen etwa mit PA 12, PA 612 oder PA 1012 von gleichem Molekulargewicht.

Die Tränkung des Faserstrangs oder des textilen Flächengebildes kann nach allen geeigneten Methoden erfolgen. Beispielsweise können diese durch die Lösung des Polyamids gezogen werden, oder die Lösung des Polyamids wird auf den Faserstrang oder das textile Flächengebilde aufgewalzt oder aufgesprüht. Die Verfahrenstechnik ist dem Fachmann von der Herstellung von faserverstärktem duromeren Kunststoff her bekannt.

Nach Durchtränkung der Fasern mit der Lösung des Polyamids wird das Lösemittel z. B. durch Erhitzen des Faser-Matrix-Verbundes ausgetrieben, so daß nach diesem Verarbeitungsschritt ein lösemittelfreier Verbund vorliegt. Dieses Prepreg kann als Halbzeug in nachfolgenden Verarbeitungsschritten weiterverarbeitet werden.

Ein derartiges Prepreg kann mit Vorteil auch zur Bewicklung eines Hohlkörpers aus Metall, Kunststoff oder Glas verwendet werden. Hierbei kann das Lösemittel vor während oder nach der Bewicklung, z. B. durch Erwärmen, aus dem Verbund ausgetrieben werden. Derartige verstärkte Hohlkörper können z. B. zur Aufnahme von gasförmigen Medien wie etwa Wasserstoff unter hohem Druck dienen.

Eine Variation dieses Verfahrens besteht darin, daß nach dem Abdunsten des Lösemittels der Kern vom Wickelkörper wieder entfernt wird.

Ein anderer Verwendungszweck ist die Substitution des Apex-Stahlrings in LKW- und PKW-Reifen. Der Apex-Ring ist der Stahlring an der Reifenkante, der durch einen in Lösung getränkten Faserstrang bzw. durch ein entsprechendes Tape ersetzt werden kann.

Darüber hinaus können die erfindungsgemäß hergestellten Faser-Matrix-Verbunde auch als Verstärkungselemente für den Brückenbau verwendet werden, etwa in Form van Seilen u. ä., oder in Fachwerkkonstruktionen, die auf Zug belastet sind, etwa in Form von Profilen (T-Profil, H-Profil u. ä.).

Ein weiterer interessanter Anwendungsbereich sind flächige Bauteile die beispielsweise zur Panzerung in Sicherheitsfahrzeugen oder im Transportwesen (einschließlich Bootsbau, Luft- und Raumfahrttechnik) eingesetzt werden können.

Als Oberflächenfinish bzw. als Schutz gegen Lichteinwirkung oder Lösemittel kann auf die hergestellten Artikel anschließend ein Lack oder eine Beschichtung aufgebracht werden, deren Art sich nach dem zu erzielenden Zweck richtet. Mit den gängigen Systemen treten keine Haftungsprobleme auf.

Die Erfindung soll im folgenden beispielhaft erläutert werden.

### Beispiel 1 a: Herstellung eines Copolyamids

Ein 100 l-Rührautoklav wird mit
- 6,75 kg: Laurinlactam,
- 21,99 kg: Dodecandisäure,
- 16,16 kg: Isophorondiamin,
- 0,29 kg: Hexamethylendiamin (als 75 %ige wäßrige Lösung),
- 4,90 kg: Wasser und
- 4,64 g: Phosphorige Säure
befüllt. Der Autoklaveninhalt wird zunächst auf 210 °C, dann nach 1 h bei dieser Temperatur weiter auf 280 °C aufgeheizt. Dabei wird der Druck im Autoklaven durch ein entsprechendes Regelventil auf 20 bar begrenzt. Nach 8 h bei 280 °C wird innerhalb 3 h auf Normaldruck entspannt und gleichzeitig die Reaktionsmischung auf 260 °C abgekühlt. Anschließend wird der Ansatz durch Überleiten von Stickstoff bei Normaldruck insgesamt 3,5 h nachkondensiert. Die Copolyamidschmelze wird schließlich als Strang aus dem Autoklaven ausgefahren, mit Wasser gekühlt, granuliert und getrocknet. Das so erhaltene Produkt zeigt eine relative Lösungsviskosität von 1,75 (0,5 %ige Lösung in m-Kresol bei 25 °C) und einen Fließpunkt von 163 °C (bestimmt mit einem Thermoanalysengerät FP 51 der Fa. Mettler).

### Beispiel 1 b:

Aramid-Rovings der Fa. AKZO vom Typ Twaron 2200 werden bei Raumtemperatur durch einen Behälter gezogen, in dem sich eine ethanolische Lösung befindet, die 20 Gew.-% des Copolyamids aus Beispiel 1 a enthält. Nach Verlassen des Lösungsbades passiert der mit Lösung getränkte Faserstrang eine Abstreifeinrichtung, mit der überschussige Lösung entfernt wird. Mehrere Faserrovings werden nach Verlassen des Tränkungsbades zu einem Tape zusammengefaßt, welches anschließend in auf 60 °C temperierten Walzen geführt wird. Aufgrund der erhöhten Temperatur verflüchtigt sich das Lösemittel sehr schnell, so daß das Tape nach Austritt aus den Walzen in fester Form vorliegt. Mit dieser Einrichtung werden Faservolumengehalte von 70 % erreicht bei einer interlaminaren Scherfestigkeit von 40 N/m².

### Beispiel 1 c:

Wie im Beispiel 1 b wird ein getränkter Roving hergestellt und in noch nassem Zustand zum Bewickeln eines Hohlkörpers verwendet. Der so verstärkte Behälter wird in einem Heißluftofen bei 60 °C 48 Stunden lang getrocknet.

### Beispiele 2 bis 6:

Nach dem gleichen Verfahren werden entsprechende Verbunde auch mit folgenden, analog zu Beispiel 1 a hergestellten Copolyamiden hergestellt:

| Nr. | Monomerkomponenten | Zusammensetzung [Gew.-%] | Lösungsviskosität | Fließpunkt [°C] |
|---|---|---|---|---|
| 2 | Laurinlactam | 15 | 1,44 | 142 |
| | Dodecandisäure/Isophorondiamin | 85 | | |
| 3 | Dodecandisäure/Isophorondiamin | 100 | 1,41 | 159 |
| 4 | Laurinlactam | 65 | 1,73 | 141 |
| | Dodecandisäure/Isophorondiamin | 35 | | |
| 5 | Laurinlactam | 40 | 1,49 | 147 |
| | Dodecansäure/MPD^{a)} | 40 | | |
| | Dodecandisäure/Isophorondiamin | 20 | | |
| 6 | Laurinlactam | 25 | 1,44 | 100 |
| | Caprolactam | 30 | | |
| | Dodecandisäure/Hexamethylendiamin | 20 | | |
| | Azelainsäure/MPD^{a)} | 25 | | |

| | | | | |
|---|---|---|---|---|
| a) MPD: 2-Methyl-1,5-diaminopentan | | | | |

Die Eigenschaften der damit hergestellten Verbunde sind denen aus Beispiel 1 b vergleichbar.

## Patentansprüche

1. Verfahren zur Herstellung von Faserverbundwerkstoffen, bei dem ein endloser Faserstrang oder ein textiles Flächengebilde mit der Lösung eines Polyamids in einem Alkohol mit einem Siedepunkt von 160 °C oder weniger getränkt wird, wonach das Lösemittel wieder aus der Matrix ausgetrieben wird.

2. Verfahren gemäß Anspruch 1,
dadurch gekennzeichnet,
daß aus dem endlosen Faserstrang oder dem textilen Flächengebilde ein Prepreg hergestellt wird, das als Halbzeug in weiteren Verarbeitungsschritten weiterverarbeitet wird.

3. Verfahren gemäß Anspruch 2,
dadurch gekennzeichnet,
daß das Prepreg zur Bewicklung eines Hohlkörpers aus Metall, Kunststoff oder Glas verwendet wird, wobei das Lösemittel vor, während oder nach Bewicklung aus dem Verbund ausgetrieben wird.

4. Verfahren gemäß einem der vorhergehenden Ansprüche,
dadurch gekennzeichnet,
daß als Fasern Aramid-, Kohlenstoff-, Glas- und/oder Polyesterfasern verwendet werden.

5. Verfahren gemäß einem der vorhergehenden Ansprüche,
dadurch gekennzeichnet,
daß das Polyamid aus folgenden Komponenten hergestellt ist:
a) 20 bis 100 Mol-% einer Kombination aus äquimolaren Mengen von Diamin und Dicarbonsäure, wobei 30 bis 100 Mol-% des Diamins ein cycloaliphatisches oder verzweigtes Diamin mit mindestens 6 Kohlenstoffatomen ist, und
b) 0 bis 80 Mol-% polyamidbildender Monomerer aus der Klasse der Lactame oder Aminocarbonsäuren mit mindestens 6 Kohlenstoffatomen.

6. Verfahren gemäß einem der vorhergehenden Ansprüche,
dadurch gekennzeichnet,
daß das Polyamid ein Copolyamid aus Laurinlactam oder ω-Aminoundecansäure mit verzweigten oder cycloaliphatischen Diaminen mit mindestens 6 Kohlenstoffatomen und mit linearen oder verzweigten Dicarbonsäuren mit 9 bis 13 Kohlenstoffatomen ist.

7. Verfahren gemäß einem der vorhergehenden Ansprüche,
dadurch gekennzeichnet,
daß die Wärmeformbeständigkeit des Polyamids, gemessen als Vicat A-Wert, mindestens 80 °C beträgt.

8. Verfahren gemäß einem der vorhergehenden Ansprüche,
dadurch gekennzeichnet,
daß als Lösemittel ein Alkohol mit 1 bis 4 Kohlenstoffatomen verwendet wird.

9. Faserverbundwerkstoff, hergestellt nach einem Verfahren gemäß einem der vorhergehenden Ansprüche.

10. Verwendung des Faserverbundwerkstoffs gemäß Anspruch 9 zur Bewicklung eines Hohlkörpers.

11. Verwendung des Faserverbundwerkstoffs gemäß Anspruch 9 zur Herstellung von Apex-Ringen.

12. Verwendung des Faserverbundwerkstoffs gemäß Anspruch 9 als Verstärkungselement für den Brückenbau oder in Fachwerkkonstruktionen, die auf Zug belastet sind.

13. Verwendung des Faserverbundwerkstoffs gemäß Anspruch 9 als flächiges Bauteil zur Panzerung in Sicherheitsfahrzeugen.

14. Verwendung des Faserverbundwerkstoffs gemäß Anspruch 9 im Transportwesen, einschließlich Bootsbau, Luft- und Raumfahrttechnik.
